# EUROPÄISCHE PATENTSCHRIFT

(11) **EP 1 371 925 B1**
(45) Veröffentlichungstag und Bekanntmachung des Hinweises auf die Patenterteilung: **12.05.2010**
(21) Anmeldenummer: 03012969.6
(22) Anmeldetag: 07.06.2003
(51) Int. Cl.: F26B 23/00

(54) **Verfahren und Vorrichtung zur Trocknung von Feuchtgut mittels Warmluft**
Process and apparatus for drying moist material using warm air
Procédé et dispositif pour le séchage de matériau humide par de l'air chaud

(30) Priorität: 10.06.2002 DE 10225489
(43) Veröffentlichungstag der Anmeldung: 17.12.2003
(73) Patentinhaber: ZEUS Energie- und Umweltsysteme GmbH Zwönitz, 08297 Zwönitz (DE)
(72) Erfinder: Kenndoff, Ulrich, 08297 Zwönitz (DE); Greiner, Steffen, 04827 Gerichshain (DE); Rösing, Gerhard, Dr., 99834 Gerstungen (DE); Pfeiffer, Karl, 99819 Wolfsburg-Unkeroda (DE)
(74) Vertreter: Liedtke, Klaus

(56) Entgegenhaltungen:
- EP-A- 0 330 159
- DE-C- 19 602 330
- US-A- 2 122 037
- US-B1- 6 364 948

## Beschreibung

Die Erfindung betrifft ein Verfahren und eine Vorrichtung zur Trocknung von Feuchtgut mittels Warmluft in einem Trockner.

Die Erfindung wird vorzugsweise angewendet zur Nutzung der Abwärme der Kraft-Wärme-Kopplung von Blockheizkraftwerken anstelle direkter oder indirekter Lufterhitzer, die gewöhnlich mit Primärenergieträgern wie Ö1, Gas und Festbrennstoff betrieben werden zur Erzeugung von Warmluft für Trocknungsprozesse; insbesondere für schonende Niedertemperaturtrocknung von Futtermitteln wie Trockengrün und zur Trocknung von Heilpflanzen sowie Lebensmitteln wie z.B. Hopfen.

Die bei dem Betrieb von Blockheizkraftwerken (BHKW) zur Energieerzeugung entstehende Abwärme wird regelmäßig zur Herstellung von Warmwasser sowie zur Raumheizung genutzt. Der insbesondere in den Sommermonaten April bis Oktober vorhandene Wärmeenergieüberschuss wird gewöhnlich durch den Betrieb von so genannten Notkühlmodulen in die Atmosphäre abgegeben, wobei ein Kühlmittel (meist Wasser) über einen Vorlauf dem Notkühlmodul zugeführt wird, dieses durchströmt und dabei von einem meist mittels eines Axialventilators erzeugten Luftstroms abgekühlt und über einen Rücklauf abgeführt wird.

Im Stand der Technik sind verschiedene Verfahren und Vorrichtungen zum Trocknen bekannt.

Nach DE 196 54 093 C2 ist ein Verfahren zur Niedertemperaturtrocknung von Feuchtgut mit Trocknungsluft in mindestens einer Trocknungsstufe, bei dem in Abhängigkeit von der Witterung als Trocknungsluft Umluft durch die Trocknungsstufe geführt, nachfolgend in einer Kühlstufe mittels eines Kältemittelkreislaufs abgekühlt und teilentfeuchtet sowie danach mittels Kompressionswärme des Kältekreislaufs erwärmt und erneut der Trocknungsstufe zugeführt wird, oder als Trocknungsluft eine Mischung aus Außenluft und Umluft der Trocknungsstufe zugeführt wird, wobei nach dem Entfeuchten zumindest ein Teil der Trocknungsluft in die Umgebung abgeführt wird.

Nachteilig bei diesem Verfahren sind der hohe technologische Aufwand, der zum Betreiben des Umluftsystems mit einer dauernden Erwärmung und Abkühlung der Umluft zur Teilentfeuchtung sowie der dafür erforderliche Energiebedarf; insbesondere ist der hohe Bedarf an elektrischer Energie zum Betrieb des Kältekreislaufs nachteilig.

Nach DE 199 58 108 A1 eine Vorrichtung zur regenerativen Trocknung der Ladung auf Schiffen mit mindestens einem mit reversiblen Trocknungsmitteln gefüllten Trockner, einem Lüfter, einem Lufterhitzer, Klappen und verbindenden Kanälen zum Laderaum, bei der die reversiblen Trocknungsmittel mit Abwärme regeneriert werden.

Nachteilig sind bei dieser Vorrichtung der hohe technologische Aufwand zur Realisierung der erfindungsgemäßen Zirkulationskreisläufe sowie das relativ geringe Wasseraufnahmevermögen des Trocknungsmittels, das zudem periodisch regeneriert werden muss.

In DE 44 26 356 A1 ist eine Vorrichtung zum Trocknen von Grünfutter, Spänen, Schnitzeln, zur Wärmeerzeugung, zur Stromerzeugung oder dergleichen mit Wirkungsgradopimierung angegeben, die eine Brennkammer mit Feuerung für Holzstaub, Späne, Stroh oder andere nachwachsende Rohstoffe enthält, welcher rauchgasseitig ein Rauchgas-Luft-Wärmetauscher und ein Gasturbinen/ Verdichter/Generator-Aggregat, das den Wärmetauscher mit Luft beaufschlagt, nachgeschaltet ist.

Nachteilig ist auch hierbei der zur Trocknung erforderliche hoher Energiebedarf.

Ein Verfahren gemäß dem Oberbegriff des Anspruchs 1 ist z.B. aus der US-B1-6 364 948 bekannt. Außerdem ist es aus der DE-C1-196 02 330 bekannt, überschüssige Wärme eines BHKW an Verbraucher mit niedrigerem Temperaturniveau zu übertragen.

Der Erfindung liegt die Aufgabe zugrunde, ein Verfahren und eine Vorrichtung anzugeben, die es ermöglichen, bei geringem konstruktiven Aufwand und ohne oder nur minimalem Bedarf an zusätzlicher Energie eine zuverlässige und schonende Trocknung eines Feuchtgutes zu realisieren.

Erfindungsgemäß wird die Aufgabe mit einem Verfahren gemäß Anspruch 1 gelöst.

Die Temperatur des dem Trockner zugeführten ersten Warmluftstromes kann durch Steuerung eines Axialventilators des Notkühlmoduls durch das Steuerungssystem auf einen Wert zwischen 30°C und 50°C geregelt werden und bei Unterschreitung einer Mindesttemperatur des ersten Warmluftstromes ein Lufterhitzer zugeschaltet werden.

Vom Steuerungssystem können Signale eines Drucksensors im Kreislauf des Kühlmittels erfasst und verarbeitet werden.

Erfindungsgemäß wird die oben genannte Aufgabe mit einer Vorrichtung gemäß Anspruch 4 gelöst.

Ferner ist es möglich, dass am Trockner ein vom Steuerungssystem zuschaltbarer Lufterhitzer angeordnet ist.

Zur Erfassung des Druckes und damit der Strömung im Kühlmittelkreislauf kann im Vorlauf des Kühlmittels ein Drucksensors angeordnet sein.

Ferner ist es vorteilhaft, dass im dem ersten Warmluftstrom, der dem Trockner zugeführt wird, ein weiterer Feuchtesensors angeordnet ist.

Der Trockner kann als Satz-, Durchlauf- oder Trommeltrockner ausgebildet sein und eine Einrichtung zur Beladung von zu trocknendem Feuchtegut und eine Einrichtung zur Entladung von getrocknetem Trockengut enthalten.

Es können natürlich aus mehrere Notkühlmodule parallelgeschaltet sein und Warmluft von diesen Notkühlmodulen dem Trockner zugeführt werden, wobei die Kühlleistung jedes Notkühlmoduls zwischen 100 kW und 200 kW beträgt.

Die Erfindung weist eine Reihe von Vorteilen auf. Durch die Nutzung von überschüssiger Abwärme von Notkühlmodulen der Kraft-Wärme-Kopplung von BHKW für Trocknungsprozesse allgemeiner Art gelingt es, anstelle direkter oder indirekter Lufterhitzer, die gewöhnlich mit Primärenergieträgern wie Öl, Gas und Festbrennstoff betrieben werden, Warmluft über einen Abwärmekreislauf zu produzieren und in den Trocknungsprozess einzugegeben. Insbesondere wird die in den Sommermonaten sonst ungenutzt in die Atmosphäre abgegebene Überschusswärme von Notkühlmodulen von BHKW einer sinnvollen Nutzung zugeführt; dadurch gelingt eine Einsparung von elektrischer Energie oder Primärenergieträgern wie Erdöl oder Erdgas. Durch die Nutzung eines Steuerungssystems für das Notkühlmodul gelingt es, die Temperatur der Trocknungsluft in einem für eine schonende Trocknung günstigen Bereich zwischen 30°C und 50°C zu halten.

Die Erfindung wird im folgenden anhand eines Ausführungsbeispieles näher erläutert.

Dazu zeigen
- Figur 1: eine erfindungsgemäße Vorrichtung zum Trocknen von Feuchtgut
und
- Figur 2: eine Einordnung des erfindungsgemäßen Verfahrens in die systematischen Abläufe eines BHKW.

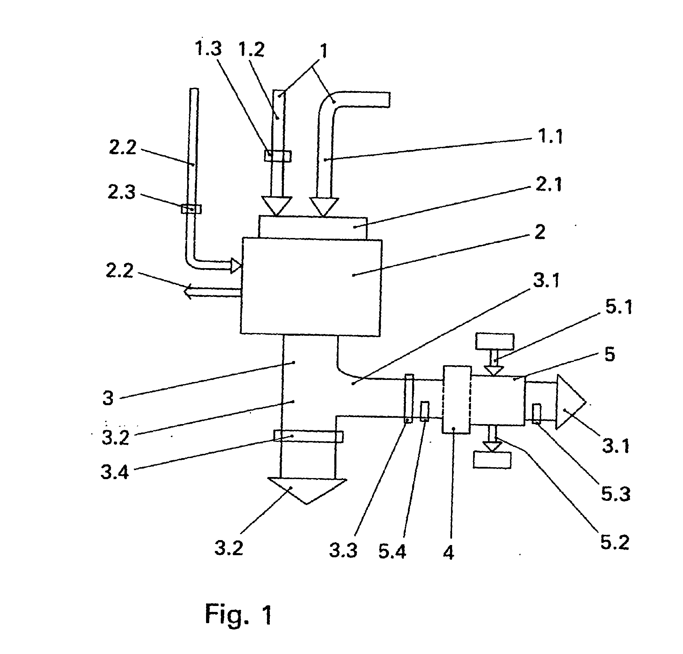

In Figur 1 ist ein herkömmliches Notkühlmodul 2 mit einem Axialventilator 2.1 dargestellt, welches zur Abkühlung von als Kühlmittel 2.2 dienendem Wasser dient. Dieses Kühlmittel 2.2 wird dem Notkühlmodul 2 mit einer Vorlauftemperatur von etwa 85°C bis 95°C zugeführt und im Notkühlmodul 2 auf eine Rücklauftemperatur von etwa 75°C bis 80°C abgekühlt. Bei der angesaugten Zuluft 1 handelt es sich vorwiegend um Außenluft 1.1. Das Notkühlmodul 2 verlassende Warmluft 3 hat eine Temperatur von etwa 30°C bis 50°C und wird in einem Kanal geführt, der sich in zwei Kanäle verzweigt; nämlich in einen ersten Kanal zur Führung eines ersten Warmluftstromes 3.1 und in einen zweiten Kanal zur Führung eines zweiten Warmluftstromes 3.2. Der erste Kanal zur Führung des ersten Warmluftstromes 3.1 enthält eine Lüftungsklappe 3.3 und schließt an einen Adapter 4 an, der den ersten Warmluftstrom 3.1 einem Trockner 5 zuführt. Der zweite Kanal zur Führung des zweiten Warmluftstromes 3.2 enthält eine zweite Lüftungsklappe 3.4 und wird über Dach geführt (Fortluft). Des weiteren ist ein Kanal, der zur Zuführung von warmer und trockener Raumluft 1.2 dient, an das Notkühlmodul 2 angeschlossen; dieser Kanal enthält eine dritte Lüftungsklappe 1.3.
Der Trockner 5 dient zur Niedertemperaturtrocknung von Feuchtgut 5.1, mit welchem der Trockner 5 beschickt worden ist; im Ergebnis entsteht ein Trockengut 5.2, welches dem Trockner 5 entnommen wird. Der Temperaturbereich um 40° C ermöglicht die schonenden Trocknung des Feuchtgutes (5.1).
Das dargestellte System erfüllt eine bivalente Funktion; nämlich die Notkühlung der Kraft-Wärme-Kopplung sowie die Erzeugung von Warmluft 3 und deren Nutzung für schonende Trocknungsprozesse. Der erfindungsgemäße Trockenprozess ist eine schonende Trocknung, bei der weder Abgasemissionen noch überhohe Trockentemperaturen die Qualität des Trockengutes 5.2 beeinflussen.
Das BHKW und der Trockner 5 sind zur Vermeidung hoher Wärmeverluste örtlich gebunden; der Einsatzort des Wärmetauscher- Notkühl-Trocknungssystems (WNT-System) muss jedoch nicht zwangsläufig an den BHKW-Raum gebunden sein. Es genügt, das Notkühlmodul 2 in der Nähe des Trockners 5 anzuordnen.
Über ein Steuerungssystem werden sowohl der Kühlprozess des Kühlmittels 2.2 als auch der Trocknungsprozess des Feuchtgutes 5.1 gesteuert. Dabei werden Signale eines Feuchtesensors 5.3 zur Messung der Feuchtigkeit der den Trockner 5 verlassenden Fortluft ausgewertet; je nach Feuchtgut 5.2 ist die Auswertung frei programmierbar.
Ist der angestrebte Trockengrad erreicht, wird die erste Lüftungsklappe 3.3 geschlossen und die zweite Lüftungsklappe 3.4 geöffnet, so dass der Trockner 5 deaktiviert ist und das trockene Trockengut 5.2 entnommen werden kann und dem Trockner 5 neues Feuchtgut 5.1 über eine sensorüberwachte Einrichtung zur Beschickung zugeführt werden kann. Die währenddessen anfallende Warmluft 3 wird als zweiter Warmluftstrom 3.2 als Fortluft über Dach abgeführt.
Liefert ein im Vorlauf des Kühlmittels 2.2 angeordneter Drucksensor 2.3 ein Signal an das Steuerungssystem, dessen Auswertung ergibt, dass keine Überschusswärme vorhanden ist und eine Notkühlung nicht erforderlich ist, wird der Axialventilator 2.1 deaktiviert, die Lüftungsklappen 3.3, 3.4, 1.3 werden geschlossen und Trocknung sowie Notkühlung sind unterbrochen. Falls eine Trocknung für ein Feuchtgut 5.1 jedoch fortgesetzt werden muss, wird ein zusätzlicher Lufterhitzer 6 zugeschaltet und die von ihm erzeugte Warmluft 3 wird dem Trockner zugeführt.
Es ist möglich und wegen der hohen erforderlichen Energiemengen für den Trocknungsprozess sinnvoll, in einem modularen Aufbau mehrere Notkühlmodule 2 mit jeweils etwa 150 kW parallel zusammenzuschalten.
Der Trockner 5 ist als Satz-, Durchlauf- oder Trommeltrockner ausgebildet.
Es ist auch möglich, das Trockengut 5.2 unmittelbar nach der Trocknung einer technologischen Weiterverarbeitung wie Verpressung und Pelletierung zuzuführen.
Erfindungsgemäß können herkömmliche Notkühlmodule 2 so umgerüstet werden, dass bei Überschusswärmeanfall Warmluft dem Trockner 5 zugeführt wird; dabei wird ein Wärmetauscher-Notkühl-Trockner-System gebildet.

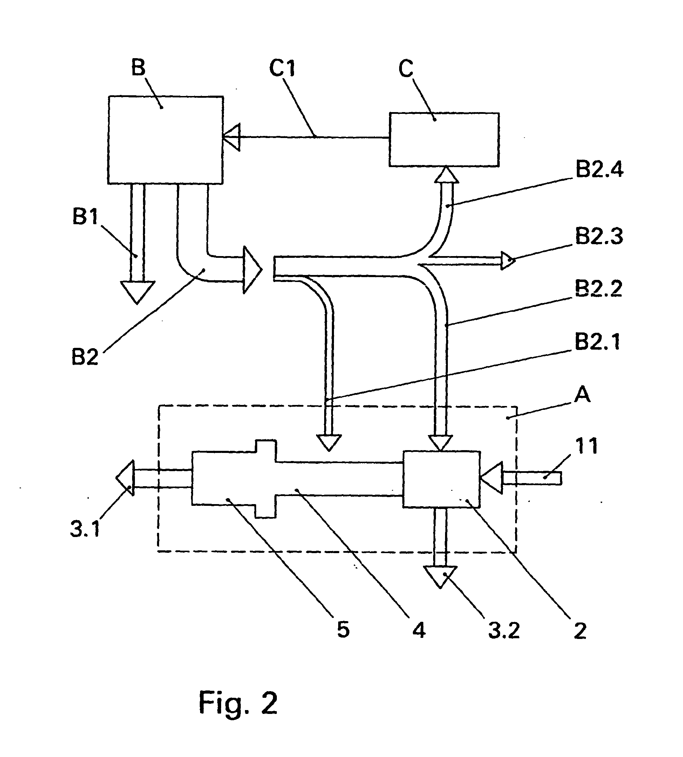

Die in Figur 2 dargestellte systematische Übersicht zeigt ein mit einem Blockheizkraftwerk B erfindungsgemäß gekoppeltes Wärmetauscher-Notkühl-Trockner-System A; das Wärmetauscher-Notkühl-Trockner-System A enthält - wie unter Figur 1 beschrieben - den Trockner 5, das Notkühlmodul 2 und den dazwischen angeordneten Adapter 4. Dem Wärmetauscher-Notkühl-Trockner-System A wird Außenluft 1.1 zugeführt, die im Notkühlmodul 2 erwärmt und als Wärmestrom 3.1, 3.2 abgeführt wird.
Im Blockheizkraftwerk (BHKW) B wird neben elektrischem Strom B1 Wärme B2 produziert, die als Strahlungswärme B2. 1 dem Wärmetauscher-Notkühl-Trockner- System A und als Überschusswärme B2.2 unmittelbar dem Notkühlmodul 2 zugeführt wird, als Nutzwärme B2.3 für Raumwärme und Brauchwassererwärmung genutzt wird und als Prozesswärme B2.4 einer Bioenergieerzeugung C zugeführt wird. Bei der Bioenergieerzeugung C erzeugte Bio-Primärenergie C1 wird dem Blockheizkraftwerk (BHKW) B zugeführt.

### BEZUGSZEICHENLISTE

1 Zuluft
   1.1 Außenluft
   1.2 Raumluft
   1.3 dritte Lüftungsklappe
2 Notkühlmodul
   2.1 Axialventilator
   2.2 Kühlmittel
   2.3 Drucksensor
3 Warmluft
   3.1 erster Warmluftstrom
   3.2 zweiter Warmluftstrom
   3.3 erste Lüftungsklappe
   3.4 zweite Lüftungsklappe
4 Adapter
5 Trockner
   5.1 Feuchtgut
   5.2 Trockengut
   5.3 Feuchtesensor
6 Lufterhitzer

A Wärmetauscher-Notkühl-Trockner-System
B Blockheizkraftwerk (BHKW)
   B1 elektrischer Strom
   B2 Wärme
      B2.1 Strahlungswärme
      B2.2 Überschusswärme
      B2.3 Nutzwärme
      B2.4 Prozesswärme
C Bioenergieerzeugung
   C1 Bio-Primärenergie

## Patentansprüche

1. Verfahren zur Trocknung eines Feuchtgutes (5.1) mit Warmluft (3) in einem Trockner (5), wobei
- zumindest zeitweise Zuluft (1) einen Erhitzer durchströmt und dabei erwärmt wird,
- die dabei erzeugte Warmluft (3) nach Durchströmen des einen Erhitzers
- in einen mittels einer ersten Lüftungsklappe (3.3) regulierbaren ersten Warmluftstrom (3.1) und in einen mittels einer zweiten Lüftungsklappe (3.4) regulierbaren zweiten Warmluftstrom (3.2) geteilt wird,
- der erste Warmluftstrom (3.1) dem Trockner (5) zugeführt wird, diesen durchströmt und dabei Feuchtigkeit des in dem Trockner (5) angeordneten Feuchtgutes (5.1) aufnimmt oder als Fortluft über Dach abgeführt wird,
- nach dem Durchströmen des Trockners (5) mittels eines Feuchtesensors (5.3) die Feuchtigkeit des ersten Warmluftstromes (3.1) gemessen wird und
- mittels eines Steuerungssystems in Abhängigkeit der vom Feuchtesensor (5.3) gemessenen Feuchtigkeit die Stellungen der ersten Lüftungsklappe (3.3) und der zweiten Lüftungsklappe (3.4) gesteuert werden,
**dadurch gekennzeichnet, dass**
- der Erhitzer ist ein Notkühlmodul (2) eines BHKW zur Abkühlung eines Kühlmittels (2.2),
- zumindest zeitweise trockene und warme Raumluft (1.2) aus dem BHKW dem Notkühlmodul (2) zugeführt wird und diese Zuführung mittels einer dritten Lüftungsklappe (1.3) immer dann gesteuert wird, wenn der Trockenprozess läuft und
- der erste Warmluftstrom (3.1) dem Trockner (5) dann zugefiihrt wird, wenn Überschusswärme vorhanden ist und sich Feuchtgut im Trockner (5) befindet.

2. Verfahren nach Anspruch 1, **dadurch gekennzeichnet, dass** die Temperatur des dem Trockner (5) zugeführten ersten Warmluftstromes (3.1) durch Steuerung eines Axialventilators (2.1) des Notkühlmoduls (2) durch das Steuerungssystem auf einen Wert zwischen 30°C und 50°C geregelt wird und dass bei Unterschreitung einer Mindesttemperatur des ersten Warmluftstromes (3.1) ein Lufterhitzer (6) zugeschaltet wird.

3. Verfahren nach einem der Ansprüche 1 oder 2, **dadurch gekennzeichnet, dass** vom Steuerungssystem Signale eines Drucksensors (2.3) im Kreislauf des Kühlmittels (2.2) erfasst und verarbeitet werden.

4. Vorrichtung zur Durchführung des Verfahrens nach den Ansprüchen 1 bis 3, bei welcher
- zwischen einem von Zuluft (1) durchströmten Notkühlmodul (2) eines BHKW zur Abkühlung eines Kühlmittels (2.2) und einem Trockner (5) ein Kanal zur Führung von Warmluft (3) angeordnet ist,
- dieser Kanal verzweigt ausgebildet ist, wobei eine Verzweigung zur Führung eines ersten Warmluftstroms (3.1) eine erste Lüftungsklappe (3.3) enthält und an den Trockner (5) angeschlossen ist und eine zweite Verzweigung einen Abluftkanal zur Führung eines zweiten Warmluftstromes (3.2) bildet und eine zweite Lüftungsklappe (3.4) enthält,
- am Austritt des ersten Warmluftstromes (3.1) nach dem Trockner (5) ein Feuchtesensors (5.3) angeordnet ist
- ein Steuerungssystem zur Steuerung der ersten Lüftungsklappe (3.3) und der zweiten Lüftungsklappe (3.4) in Abhängigkeit der vom Feuchtesensor (5.3) gemessenen Feuchtigkeit angeordnet ist und
- sich ein weiterer Kanal zur Zuführung trockener und warmer Raumluft (1.2) zwischen dem BHKW und dem Notkühlmodul (2) befindet, in dem eine dritte Lüftungsklappe (1.3) angeordnet ist.

5. Vorrichtung nach Anspruch 4, **dadurch gekennzeichnet, dass** am Trockner (5) ein vom Steuerungssystem zuschaltbarer Lufterhitzer (6) angeordnet ist.

6. Vorrichtung nach Anspruch 4 oder 5, **dadurch gekennzeichnet, dass** im Vorlauf des Kühlmittels (2.2) ein Drucksensor (2.3) zur Erfassung des Druckes und damit der Strömung im Kühlmittelkreislauf angeordnet ist.

7. Vorrichtung nach Anspruch 4 bis 6, **dadurch gekennzeichnet, dass** im dem Trockner (5) zugeführten ersten Warmluftstrom (3.1) ein weiterer Feuchtesensor (5.4) angeordnet ist.

8. Vorrichtung nach einem der Ansprüche 4 bis 7, **dadurch gekennzeichnet, dass** der Trockner (5) als Satz-, Durchlauf- oder Trommeltrockner ausgebildet ist und dass am Trockner (5) eine Einrichtung zur Beladung von zu trocknendem Feuchtegut (5.1) und eine Einrichtung zur Entladung von getrocknetem Trockengut (5.2) angeordnet sind.

9. Vorrichtung nach einem der Ansprüche 4 bis 8, **dadurch gekennzeichnet, dass** mehrere Notkühlmodule (2) parallel geschaltet sind und Warmluft (3) von diesen Notkühlmodulen (2) dem Trockner (5) zugeführt wird, wobei die Kühlleistung jedes Notkühlmoduls (2) zwischen 100 kW und 200 kW beträgt.

## Claims

1. Process for drying moist material (5.1) in a dehumidifier (5) with hot air (3), whereas
- air intake (1) at least temporarily streams a heater thereby heating it,
- after streaming process of one heater thereby generated hot air (3)
- is divided into a first hot air stream (3.1) being controllable by means of a first ventilation flap (3.3) and into a second hot air stream (3.2) being controllable by means of a second ventilation flap (3.4),
- the first hot air stream (3.1) is led to the dehumidifier (5) streaming it and thereby absorbing humidity of moist material (5.1) disposed in the dehumidifier (5) or whereas it is conducted as exhaust air,
- after streaming of the dehumidifier (5) humidity of the first hot air stream (3.1) is measured by means of a humidity sensor (5.3) and
- positions of the first ventilation flap (3.3) and the second ventilation flap (3.4) are controlled by means of a control system in dependence on the humidity measured by the humidity sensor (5.3),
**characterized in that**
- the heater is an emergency cooling module (2) of a block-type thermal power station for cooling a coolant (2.2),
- dry and hot ambient air (1.2) of the block-type thermal power station is at least temporarily led to emergency cooling module (2) and this inlet is always controlled by means of a third ventilation flap (1.3) during a dehumidifying process and
- the first hot air stream (3.1) is led to the dehumidifier (5) when having excess heat and when there is moist material in the dehumidifier (5).

2. Process of claim 1, **characterized in that** temperature of the first hot air stream (3.1) led to the dehumidifier (5) is regulated by control system controlling an axial ventilating fan (2.1) of the emergency cooling module (2) to a value between 30°C and 50°C and that in case of an undercut of a minimum temperature of the first hot air stream (3.1) an air heater (6) is selected.

3. Process of one of claims 1 or 2, **characterized in that** signals of a pressure sensor (2.3) are detected and converted by a control system within the cycle of a coolant (2.2).

4. Apparatus for realizing the process of claims 1 to 3, whereas
- a duct is disposed between an emergency cooling module (2) of a block-type thermal power station streamed by air intake (1) for cooling a coolant (2.2) and a dehumidifier (5) for leading hot air (3),
- this duct is bifurcated formed, whereas a bifurcation for leading a first hot air stream (3.1) contains a first ventilation flap (3.3) and is connected to the dehumidifier (5) and whereas a second bifurcation forms an exit air duct for leading a second hot air stream (3.2) containing a second ventilation flap (3.4),
- a humidity sensor (5.3) is disposed on the exit of the first hot air stream (3.1) behind the dehumidifier (5),
- a control system for controlling the first ventilation flap (3.3) and the second ventilation flap (3.4) is disposed in dependence on the humidity measured by the humidity sensor (5.3) and
- there is another duct for leading dry and hot ambient air (1.2) between the block-type thermal power station and the emergency cooling module (2) in which a third ventilation flap (1.3) is disposed.

5. Apparatus of claim 4, **characterized in that** an air heater (6) is disposed on the dehumidifier (5) being selectable by the control system.

6. Apparatus of claim 4 or 5, **characterized in that** a pressure sensor (2.3) is disposed in the forward motion of the coolant (2.2) for detecting the pressure and consequently the stream within the coolant cycle.

7. Apparatus of claims 4 to 6, **characterized in that** another humidity sensor (5.4) is disposed in the first hot air stream (3.1) led to the dehumidifier (5).

8. Apparatus of one of claims 4 to 7, **characterized in that** the dehumidifier (5) is formed as batch dryer, continuous dryer or drum dryer and that a device for charging moist material (5.1) to be dried and a device for discharging dried moist material (5.2) are disposed on the dehumidifier (5).

9. Apparatus of one of claims 4 to 8, **characterized in that** multiple emergency cooling modules (2) are connected in parallel and that hot air (3) is led to the dehumidifier (5) by these emergency cooling modules (2), whereas the cooling efficiency of each emergency cooling module (2) amounts to between 100 kW and 200 kW.

## Revendications

1. Procédé de séchage d'une matière humide (5.1) par de l'air chaud (3) dans un séchoir (5), où
- de l'air d'amenée (1) traverse au moins temporairement un réchauffeur et est ainsi réchauffé,
- après passage par le réchauffeur, l'air chaud (3) généré est divisé
- en un premier courant d'air chaud (3.1) régulable au moyen d'un premier clapet d'aération (3.3) et en un deuxième courant d'air chaud (3.2) régulable au moyen d'un deuxième clapet d'aération (3.4),
- le premier courant d'air chaud (3.1) est conduit vers le séchoir (5), traverse celui-ci et absorbe alors l'humidité de la matière humide (5.1) disposée dans le séchoir (5) ou est extrait comme air rejeté par le toit,
- après passage par le séchoir (5), l'humidité du premier courant d'air chaud (3.1) est mesurée au moyen d'un capteur d'humidité (5.3), et où
- les positions du premier clapet d'aération (3.3) et du deuxième clapet d'aération (3.4) sont commandées au moyen d'un système de commande en fonction de l'humidité mesurée par le capteur d'humidité (5.3),
**caractérisé**
- **en ce que** le réchauffeur est un module de refroidissement de secours (2) prévu pour le refroidissement d'un réfrigérant (2.2) d'une centrale de chauffage à distance,
- de l'air ambiant (1.2) au moins temporairement sec et chaud de la centrale de chauffage à distance est conduit vers le module de refroidissement de secours (2) et cette amenée est toujours commandée en cours de processus de séchage au moyen d'un troisième clapet d'aération (1.3), et
- **en ce que** le premier courant d'air chaud (3.1) est conduit vers le séchoir (5) lorsque de la chaleur excédentaire est présentée et que de la matière humide se trouve dans le séchoir (5).

2. Procédé selon la revendication 1, **caractérisé en ce que** la température du premier courant d'air chaud (3.1) conduit vers le séchoir (5) est régulée par le système de commande, par commande d'un ventilateur axial (2.1) du module de refroidissement de secours (2), à une valeur comprise entre 30°C et 50°C, et **en ce qu'**un réchauffeur d'air (6) est activé si la température du premier courant d'air chaud (3.1) tombe sous une température minimale.

3. Procédé selon l'une des revendications 1 ou 2, **caractérisé en ce que** des signaux d'un capteur de pression (2.3) sont saisis et traités par le système de commande dans le circuit du réfrigérant (2.2).

4. Dispositif pour l'exécution du procédé selon l'une des revendications 1 à 3, où
- un canal pour l'amenée d'air chaud (3) est disposé entre un module de refroidissement de secours (2) prévu pour le refroidissement d'un réfrigérant (2.2) d'une centrale de chauffage à distance, où s'écoule de l'air d'amenée (1), et un séchoir (5),
- ledit canal est réalisé avec des branchements, un branchement pour la conduction d'un premier courant d'air chaud (3.1) contenant un premier clapet d'aération (3.3) et étant raccordé au séchoir (5), et un deuxième branchement formant un canal d'extraction d'air pour la conduction d'un deuxième courant d'air chaud (3.2) et contenant un deuxième clapet d'aération (3.4),
- un capteur d'humidité (5 .3) est disposé à la sortie du premier courant d'air chaud (3.1) après le séchoir (5),
- un système de commande pour la commande du premier clapet d'aération (3.3) et du deuxième clapet d'aération (3.4) en fonction de l'humidité mesurée par le capteur d'humidité (5.3) est prévu, et où
- un autre canal pour l'amenée d'air ambiant sec et chaud (1.2), où est prévu un troisième clapet d'aération (1.3), est disposé entre la centrale de chauffage à distance et le module de refroidissement de secours (2).

5. Dispositif selon la revendication 4, **caractérisé en ce qu'**un réchauffeur d'air (6) activable par le système de commande est disposé sur le séchoir (5).

6. Dispositif selon la revendication 4 ou 5, **caractérisé en ce qu'**un capteur de pression (2.3) pour la saisie de la pression et donc de l'écoulement dans le circuit de réfrigérant est disposé dans l'amenée du réfrigérant (2.2).

7. Dispositif selon les revendications 4 à 6, **caractérisé en ce qu'**un autre capteur d'humidité (5.4) est disposé dans le premier courant d'air chaud (3.1) conduit dans le séchoir (5).

8. Dispositif selon l'une des revendications 4 à 7, **caractérisé en ce que** le séchoir (5) est réalisé comme séchoir discontinu, continu ou rotatif, et **en ce qu'**un dispositif de chargement de matière humide (5.1) à sécher et un dispositif de déchargement de matière séchée (5.2) sont prévus sur le séchoir.

9. Dispositif selon l'une des revendications 4 à 8, **caractérisé en ce que** plusieurs modules de refroidissement de secours (2) sont montés en parallèle et **en ce que** de l'air chaud (3) est conduit vers le séchoir (5) depuis lesdits modules de refroidissement de secours (2), la capacité de réfrigération de chaque module de refroidissement de secours (2) étant comprise entre 100 kW et 200 kW.
